# EUROPEAN PATENT APPLICATION

(11) **EP 1 235 430 A2**
(43) Date of publication of application: **28.08.2002**
(21) Application number: 01124254.2
(22) Date of filing: 16.10.2001
(51) Int. Cl.: H04N 7/14

(54) **Mobile communication terminal apparatus**

(30) Priority: 26.02.2001 JP 2001049867
(71) Applicant: Kabushiki Kaisha Toshiba, Tokyo 105-8001 (JP)
(72) Inventor: Masuda, Atsushi, Intellectual Property Division, Minato-ku, Tokyo 105-8001 (JP)
(74) Representative: HOFFMANN - EITLE

(57) **Abstract**

This invention is a mobile communication terminal apparatus capable of radio communication with a base station, in a videophone mode for communication on video and speech or in a speech communication mode for communication on speech, comprising means for detecting input of a predetermined number, and means, when the means for detecting detects the predetermined number while the speech communication mode is set, for changing the speech communication mode to the videophone mode.

## Description

This invention relates to a mobile communication terminal apparatus comprising a videophone function and, more particularly, a mobile communication terminal apparatus suitable for communication in case of an emergency.

There is a mobile communication terminal apparatus in a speech communication mode to make communication on speech alone and a videophone mode to make communication on both video and speech. Generally, the terminal apparatus makes a call in the speech communication mode when the terminal apparatus is set in the speech communication mode, and makes a call in the videophone mode when the terminal apparatus is set in the videophone mode.

When an operator of the terminal apparatus calls an emergency center of police stations, fire stations, hospitals, emergency service institutions or the like, the operator wants to quickly explain situations of an incident and requests the videophone mode rather than the speech communication mode.

In case where the operator is attacked by a thug, for example, the operator can call the emergency center to need help, but may not be able to speak. In this case, it is difficult to explain the incident by communication in the speech communication mode on speech.

As described above, however, the calling operation is made in the mode which has been set in calling. When the operator of the terminal apparatus calls the emergency center, the operator needs to confirm the mode of the terminal apparatus. If the speech communication mode is set, the operator needs to change the mode to the videophone mode. Therefore, there is a problem that the calling operation in the desired mode causes much trouble in any case of an emergency.

The object of this invention is to provide a mobile communication terminal apparatus capable of making communication in the videophone mode without executing any especial operations in detecting a request for communication in case of an emergency.

This invention is a mobile communication terminal apparatus capable of radio communication with a base station, in a videophone mode for communication on video and speech or in a speech communication mode for communication on speech, comprising means for detecting input of a predetermined number, and means, when the means for detecting detects the predetermined number while the speech communication mode is set, for changing the speech communication mode to the videophone mode.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a block diagram of a mobile communication terminal apparatus according to an embodiment of this invention;
FIG. 2 shows a flow chart of a control operation of the mobile communication terminal apparatus in FIG. 1;

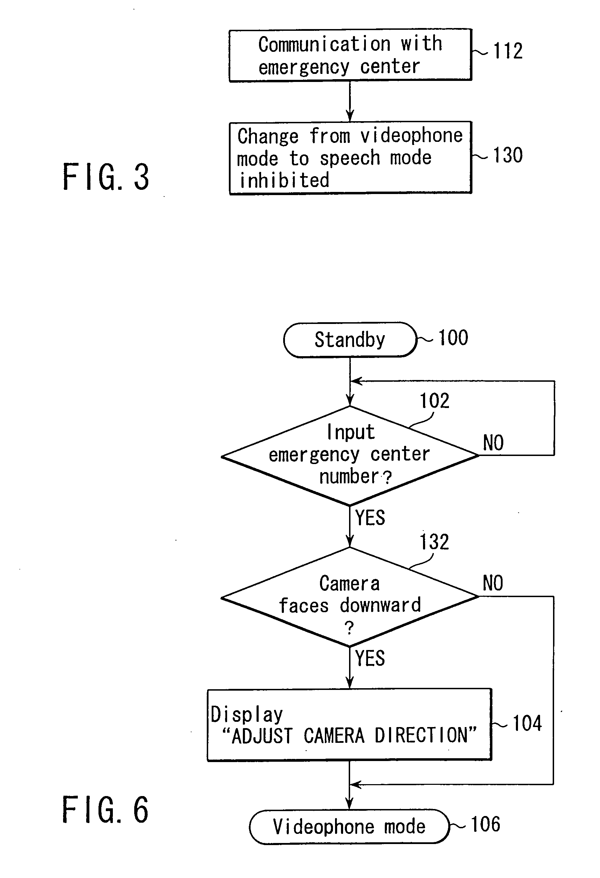

FIG. 3 shows a flow chart of a function added to the control operation of the mobile communication terminal apparatus in FIG. 1;
FIG. 4 shows a state in which a camera provided on the mobile communication terminal apparatus in FIG. 1 faces a front side;
FIG. 5 shows a state in which the camera provided on the mobile communication terminal apparatus in FIG. 1 faces a housing side; and
FIG. 6 shows a flow chart explaining a modified example of a control operation of the mobile communication terminal apparatus in FIG. 1.

An embodiment of this invention will be explained below with reference to the drawings.

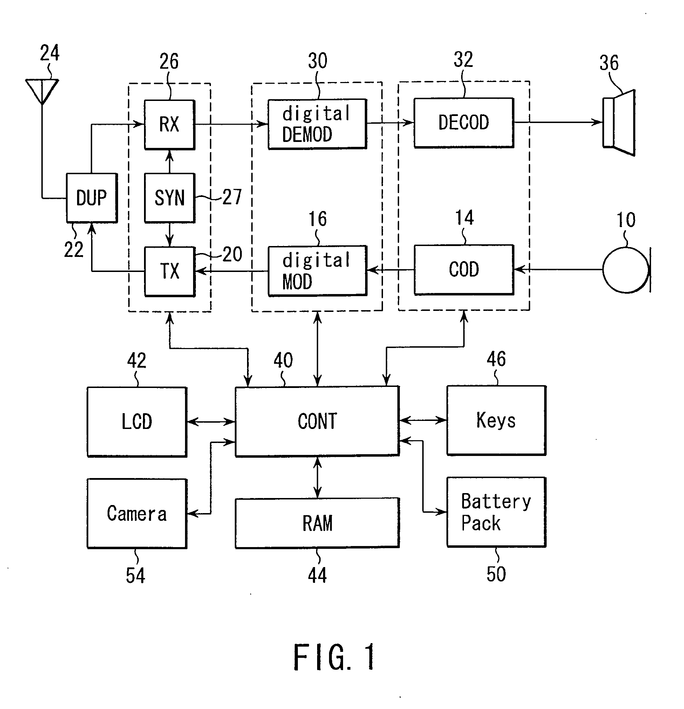

FIG. 1 shows a block diagram of a mobile communication terminal apparatus according to this embodiment. A transmitted speech signal outputted from a microphone 10 is digitized and compressed in an encoding section 14.

The compressed signal is subjected to digital modulation in a digital modulation section 16. The modulated signal is converted into a high frequency with a local signal outputted from a synthesizer 27 and amplified to a predetermined power level in a radio transmission section 20, and is outputted to a duplexer 22.

The duplexer 22 supplies the high-frequency signal inputted from the radio transmission section 20 to an antenna 24. The supplied high-frequency signal is transmitted via the antenna 24 as a radio high-frequency signal.

On the other hand, the antenna 24 receives a high-frequency radio signal from a base station. The received radio signal is supplied to a radio reception section 26 through the duplexer 22.

The radio reception section 26 amplifies the radio signal, and then converts it into a baseband signal by using a local signal from a synthesizer 27. The converted signal is inputted to a digital demodulation section 30 and thereby digitally demodulated.

The digitally demodulated signal is decoded and decompressed in a decoder 32, and converted into an analog speech signal. The analog speech signal is outputted from a loudspeaker 36.

An LCD (Liquid Crystal Display) 42 serving as a display section, a RAM 44 serving as a memory section and keys 46 serving as an operation section are connected to a control section 40.

The LCD 42 is employed to display characters and images. The keys 46 are composed of number keys and special-purpose keys and employed to input characters, various instructions and the like. The RAM 44 preliminarily stores an ID number provided by a common carrier.

A camera 54 is further connected to the control section 40. The camera 54 may be connected to a housing in a rotation type or a fixation type. If the fixation-type connection is employed, a switch may be provided on an apparatus to detect the state of the camera 54 facing toward the housing of the mobile communication terminal apparatus.

A battery pack 50 is further connected to the control section 40. When the battery pack 50 is attached to a battery chamber of the mobile communication terminal apparatus, power is supplied to each section under the control of the control section 40.

Next, the operation of the above constituted mobile communication terminal apparatus will be explained.

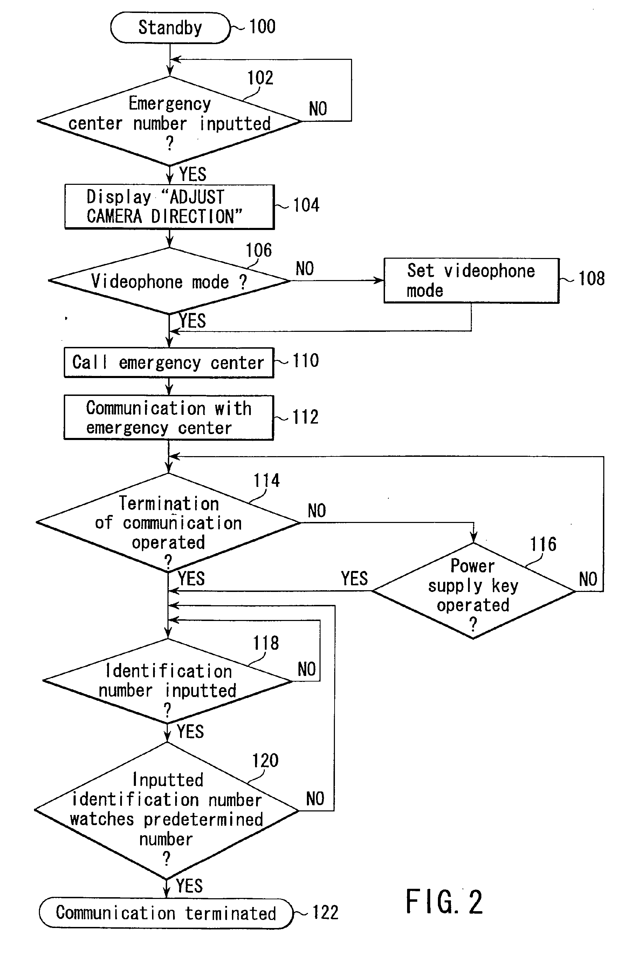

FIG. 2 shows a flow chart of the operations, which are executed by the control section 40.

When the mobile communication terminal apparatus is in a standby state (step 100), the control section 40 monitors whether a telephone number of an emergency center is input by the keys 46 or not (step 102). The emergency center implies an emergency call center of, for example, police stations, fire stations, hospitals, lifesaving services and the like.

When the control section 40 detects the input of the telephone number of the emergency center, the control section 40 allows the LCD 42 to display "ADJUST DIRECTION OF CAMERA" (step 104) if the camera 54 mounted on the terminal apparatus is in the rotary type. If the camera 54 is in the fixation type, this display is not made.

Next, the control section 40 detects whether the terminal apparatus is in the videophone mode or not (step 106). If the terminal apparatus is not in the videophone mode, the control section 40 sets the terminal apparatus to be in the videophone mode (step 108).

When the terminal apparatus has been set in the videophone mode at step 106 or is set to be therein at step 108, the control section 40 calls the emergency center (step 110) and starts communication with the emergency center (step 112).

When the communication is started, the terminal apparatus transmits an image taken by the camera 54. The emergency center receives the transmitted image from the terminal apparatus, and stores the transmitted image as occasion requires.

Thus, the control section 40 controls the terminal apparatus to be definitely set in the videophone mode when the telephone number of the emergency center is input, and at least the following advantages can be thereby obtained:
1. It is possible to inform the situation of the emergency occurring on the terminal apparatus side to the emergency center, not only by speech, but also by images, without making any especial operations other than inputting of the telephone number of the emergency center.
2. If the user of the terminal apparatus is attacked by a thug, the user may be unable to speak. Even in this case the terminal apparatus can be definitely set in the videophone mode.
3. As the terminal apparatus in the speech communication mode is controlled to be definitely set in the videophone mode, the user in the emergency does not need to confirm whether the mode of the terminal apparatus which is set before calling is the speech communication mode or not.

The operations are explained again here on the basis of FIG. 2.

After starting communication with the emergency center, the terminal apparatus detects whether termination of the communication is operated or not (step 114) and whether a power supply key is operated or not (step 116).

If the control section 40 detects that either of the operations has been made, the control section 40 makes the LCD 42 display an instruction that the user should input the ID number and waits for inputting of the ID number by the keys 46 (step 118).

The control section 40 detects whether the ID number which the user inputs by the keys 46 matches the ID number stored in the RAM 44 or not (step 120). The control section 40 terminates the communication only when the ID numbers match one another (step 122).

The thug, attacking the user of the terminal apparatus, would reflectively terminate the communication with the emergency center by pushing down the termination key or the power supply key of the terminal apparatus.

In this case, according to the present embodiment, once communication with the emergency center is made, the communication cannot be terminated without confirming the matching of the ID numbers. The communication with the emergency center can be thereby maintained unless the ID number match one another.

To prevent the videophone mode from being cleared after starting communication with the emergency center, the terminal apparatus comprises a function of inhibiting the change of the videophone mode to the speech communication mode (step 130). Thus, the communication with the emergency center in the videophone mode can be certainly maintained.

Further, it is possible to prevent the communication with the emergency center from being easily disconnected by providing a locking mechanism section for inhibiting detachment of the battery pack after the connection to the emergency center is made besides the above function.

As for this locking mechanism section, a protruding portion for protruding into a battery chamber when the user calls the emergency center is provided on the housing of the terminal apparatus and a recess portion for fitting with the protruding portion is provided on the battery pack 50.

Thus, the protruding portion fits into the recess portion to prevent detachment of the battery pack 50, and the communication can be thereby maintained. When the communication with the emergency center is terminated, the protruding portion returns to the initial position inside the terminal apparatus from the battery chamber.

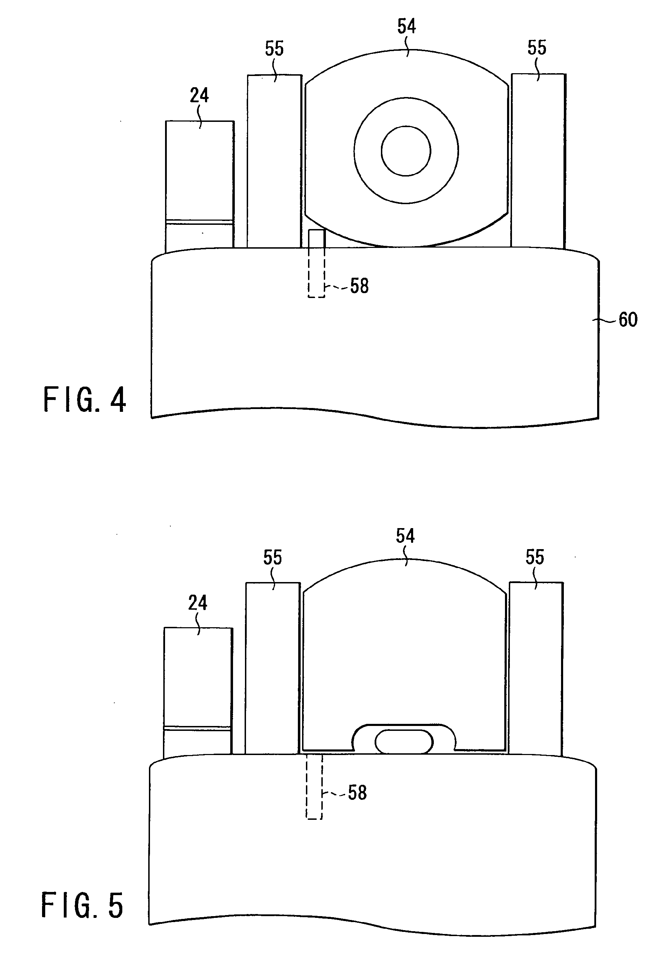

Moreover, the adjustment of the direction of the rotatable camera at step 104 of FIG. 2 can be implemented in structures shown in, for example, FIGS. 4 and 5. FIG. 4 shows a state in which the camera 54 faces a front side. FIG. 5 shows a state in which the camera 54 faces a housing side of the terminal apparatus.

The camera 54 is attached to the terminal apparatus so as to be rotatable by support portions 55 protruding from a housing 60 of the terminal apparatus. A switch 58 is provided on the housing 60 so as to freely protrude from or hide in the housing 60 by a spring or the like.

The switch 58 protrudes when the camera 54 is capable of shooting, i.e. when the camera 54 faces the front side. On the other hand, when the camera 54 is rotated to face the housing 60 side, the switch 58 is pushed down to the housing 60 by the camera 54 as shown in FIG. 5. As a result, the control section 40 connected to the switch 58 determines that the camera 54 faces the housing side by the operation of the switch 58.

The control operation of the terminal apparatus thus constituted will be explained with reference to a flow chart of FIG. 6.

When the terminal apparatus is in the standby state (step 100), the control section 40 detects that the telephone number of the emergency center is inputted (step 102). After that, if the camera 54 faces downward to the housing 60 side, the control section 40 detects this condition from the operation of the switch 58 (step 132), and allows the LCD 42 to display "ADJUST CAMERA DIRECTION" (step 104). Thus the operation shifts to step 106. On the other hand, if the control section 40 detects from the operation of the switch 58 that the camera 54 faces any other sides than the terminal apparatus side, the control section 40 does not execute the above display, and the operation shifts to step 106 of FIG. 2.

The above display is not limited to the direction of the camera 54, but may make the user take notice at any time.

If a camera is a fixation type, the control section detects whether the fixation type camera is set to be capable of shooting. If the control section detects that the camera is set to be incapable of shooting, the control section may display a request the operator to operate the key for setting the camera to be capable of shooting.

## Claims

1. A mobile communication terminal apparatus capable of radio communication with a base station, in a videophone mode for communication on video and speech or in a speech communication mode for communication on speech, **characterized by** comprising:
means (40) for detecting input of a predetermined number; and
means (40) for changing said speech communication mode to said videophone mode, when said means for detecting detects said predetermined number while the speech communication mode is set.

2. A mobile communication terminal apparatus according to claim 1, **characterized by** further comprising:
a camera (54) whose shooting direction is changeable; and
means (40, 42) for making announcement to request an operator of said mobile communication terminal apparatus to adjust the shooting direction of said camera (54) if input of said predetermined number is detected by said means (40) for detecting.

3. A mobile communication terminal apparatus according to claim 1, **characterized by** further comprising:
a camera (54) whose shooting direction is changeable;
means (40) for detecting the shooting direction of said camera (54); and
means (40, 42) for making announcement to request an operator of said mobile communication terminal apparatus to adjust the shooting direction of said camera (42) in accordance with a result of the detection of shooting direction, when input of said predetermined number is detected by said means (40) for detecting.

4. A mobile communication terminal apparatus according to claim 1, **characterized in that** said predetermined number is a telephone number of an emergency center.

5. A mobile communication terminal apparatus according to claim 1, **characterized in that** said predetermined number is a telephone number of a hospital.

6. A mobile communication terminal apparatus according to claim 1, **characterized by** further comprising means (40) for requesting an identification number to be input, in detecting an operation to request termination of communication after communication with a party of communication having said predetermined number is started, and for maintaining said communication unless the input identification number matches a pre-registered identification number.

7. A mobile communication terminal apparatus according to claim 1, **characterized by** further comprising means (40) for requesting an identification number to be input, in detecting an operation to disconnect a power supply after communication with a party of communication having said predetermined number is started, and for maintaining said communication unless the input identification number matches a preregistered identification number.

8. A mobile communication terminal apparatus according to claim 1, **characterized by** further comprising means (40) for inhibiting change from said videophone mode to said speech communication mode after communication with a party of communication having said predetermined number is started.
